# EUROPEAN PATENT APPLICATION

(11) **EP 2 039 731 A1**
(43) Date of publication of application: **25.03.2009**
(21) Application number: 09000008.4
(22) Date of filing: 02.11.2005
(51) Int. Cl.: C09D 127/12

(54) **Fluorpolymer coatings containing telomers**

(30) Priority: 02.11.2004 US 624554 P
(62) Divisional of application: 05816341.1
(71) Applicant: E.I. DUPONT DE NEMOURS AND COMPANY, Wilmington DE 19898 (US)
(72) Inventor: The designation of the inventor has not yet been filed
(74) Representative: Matthews, Derek Peter

(57) **Abstract**

Coatings containing fluoropolymers and fluorinated telomers have been developed. The coatings are suitable for coating plastic substrates and are suitable for use in applications wherein relatively low reflectivity is desired.

## Description

### FIELD OF INVENTION

The present invention relates to fluoropolymer coatings. The coatings contain fluorinated telomers, and are useful in providing low-reflectance layers having abrasion and scratch resistance.

### BACKGROUND

Much work has been done concerning low reflective plastics, particularly for plastic lenses, optical devices and anti-reflective film for displays. One method used is vapor disposition of oxidized metal on the surface of the plastic. However, vapor deposition generally uses a batch process and when the substrate is large, the productivity can be undesirably low. Another method is to apply a coating of fluoropolymer solution. The coating is done by a dipping process and is applicable for large substrates with high productivity. Though fluoropolymers have low reflective indexes, they also have inadequate adhesion to many plastic substrates. Improvement in the adhesion between fluoropolymers and substrate plastics has been long sought.

Combinations of fluorinated copolymers coated on various plastic and glass substrates are disclosed in US-A-5599631, W02000/0055130 and W02005/044939.

However, known fluoropolymer coatings often do not have sufficient abrasion resistance such as scratch resistance because fluoropolymer is itself soft. There is a need for coatings having relatively low reflective index and adequate adhesion. It is desirable to be able to form such coatings using fluoropolymer solutions. The present invention is directed to these, and other, important ends.

### SUMMARY OF THE INVENTION

One aspect of the present invention is a two-layer coating system for coating substrates comprising an upper layer containing a fluorinated telomer and one or more fluorinated copolymers selected from:
a. poly(TFE/HFP) wherein the molar ratio of HFP to TFE is from about 0.3 to about 1.9;
b. VF2/TFE/HFP terpolymer, wherein the molar ratio of HFP to TFE is from about 0.3 to about 1.9 and the concentration of VF2 is about 19 mole %; and
c. poly(TFE/perfluoro-2,2-dimethyldioxole) wherein the concentration of the perfluorodimethyldioxole is from about 60 to about 90 mole %;
and a lower layer comprising one or more selected from:
a. poly(VF2/TFE/HFP) wherein the ratio of TFE to HFP is from about 0.3 to about 1.9 and the concentration of VF2 is from about 18 to about 60 mole % on PMMA substrates and from about 12 to about 40 mole % on PC, PET, and PS substrates;
b. poly(VF/TFE/HFP) wherein the ratio of TFE to HFP is from about 0.9 to about 2.1 and the concentration of VF is from about 42 to about 58 mole %;
c. poly(VAc/TFE/HFIB) wherein the concentration of VAc is from to 69 mole % and the concentration of HFIB is from 14 to 52 mole %; and
d. a TFE/PVOH graft comprising about 46 mole percent TFE.

In some embodiments, the amount of telomer is up to 80% by weight.

In some embodiments, the telomer comprises tetrafluoroethylene or perfluoroalkylpolyether units. In some embodiments, the telomere has the formula (C₂F₄)ₙ or F-(CFCF₃-CF₂-O)ₙ-CF₂CF₃ wherein n is 2 to 500. In some embodiments, the telomere is endcapped.

Another aspect of the present invention is a method of increasing the hardness of a two layer coating system comprising fluorinated copolymers as defined above, comprising incorporating into the uppoer layer of the coating a fluorinated telomer.

A further aspect of the present invention is a method of coating a substrate, comprising:
a. providing a substrate having a surface;
b. dissolving a fluorinated copolymer in a solvent to form a product;
c. adding to the product a dispersion comprising a fluorinated telomer in a fluorinated solvent to form a mixture; and applying the mixture of step b) to the surface of the substrate to form a two layer coating, system as defined above.

These and other aspects of the present invention will be apparent to those skilled in the art in view of the following description and the appended claims.

### DETAILED DESCRIPTION

The present invention provides coating systems that show improved hardness as compared to conventional coatings made from fluoropolymers, and methods of preparing such coatings. The coating systems comprise fluorinated copolymers and fluorinated telomers. It has been discovered that the abrasion resistance of fluoropolymer coatings is improved by addition of a fluorinated telomer. The coatings provide an anti-reflectance (AR) coating having desirable abrasion resistance and adhesion properties without the need to apply primers or surface protection layers.

Unless otherwise stated, the following terms and abbreviations when used herein have the following meanings:
HFIB - Hexafluoroisobutylene, (CF₃)₂C=CH₂
HFP - Hexafluoropropylene, CF₂=CF-CF₃
PC - Polycarbonate
PET - Polyethyleneterephthalate
PMMA - Polymethylmethacrylate
PMVE - Perfluoromethylvinylether
PVOH - Polyvinyl alcohol
PS - Polysulfone
TAC - Triacetyl cellulose
Teflon® AF - TFE/Perfluoro-2,2-dimethyldioxole copolymer
TFE - Tetrafluoroethylene, CF₂=CF₂
VAc - Vinyl acetate, CH₃-C(O)-OCH=CH₂
VF - Vinyl fluoride, CH₂=CHF
VF2 - Vinylidene fluoride, CF₂=CH₂

By "fluorinated telomer" it is meant a low-molecular weight fluorinated polymer, preferably with a degree of polymerization of 2 to 500. Telomers can have a wide variety of degrees of polymerization such as, for example, 18 or more, up to 100, 400, or 500.

The term "fluorinated" means that at least 90% of the combined total of halogen and hydrogen atoms are fluorine atoms. In one embodiment, the polymer is perfluorinated, which means that substantially or exactly 100% of the combined total of halogen and hydrogen atoms on the backbone are fluorine atoms.

In some embodiments the fluorinated telomer is derived from polytetrafluoroethylene oligomers or perfluoroalkylpolyethers oligomers, such as those having formula (C₂F₄)ₙ or F-(CFCF₃-CF₂-O)ₙ-CF₂CF₃, excluding end-capping, where n is typically within the range of 2 to 500 but can be, for example from about 18 to 50, 100 or 200. The telomer chains can be end-capped by any group that does not significantly affect the properties of the telomer, such as H, alkyl groups and fluorinated alkyl groups. The telomers can be a mixture of two or more fluorinated telomere compositions and/or molecular weights. Such telomers are well-known and can be prepared by any known methods such as those disclosed in Ameduri, B et al, Journal of Fluorine Chemistry (2001), 107(2), 397-409 and Topics in Current Chemistry (1997), 192, Organofluorine Chemistry: Fluorinated Alkenes and Reactive Intermediates, 165-233. Telomers suitable for use in the instant invention can also contain small amounts of additives, such as , for example, silica, rust-preventive agents, molybdenum disulfide, sodium nitrite and/or graphite.

Telomers useful in the instant invention can also be obtained commercially from various sources. Examples of commercially available fluorinated telomers are those in the Krytox® perfluoroalkylpolyethers family such as Krytox® 143 and Krytox® GPL, and those in the DuPont™ DryFilm family such as DuPont™ DryFilm RA and DuPont™ DryFilm 1000, all available from E.I. DuPont de Nemours, Wilmington, DE. These Krytox® and DuPont™ Dry Film compounds are particles that are sold commercially as dispersions in a solvent.

The telomer can be dispersed in a solvent for ease of addition to the coating system. Typical solvents in which the telomer can be dispersed include, for example, isopropyl alcohol, fluorocarbons and hydrofluorocarbons such as those in the Vertrel® family of solvents, as well as mixtures thereof. Generally, the dispersion can contain about 0.01 % to 20%, and usually about 0.1 to 5% by weight of the telomer.

Applicants have discovered that adding fluorinated telomer to the coating mixture can maximize the hardness of the coating while minimizing the loss of transmittance. The amount of telomer in the coating can be any amount, preferably up to about 80% by weight, or up to about 20 % by weight, respectively. For telomers based on tetrafluoroethylene, such as those in the DryFilm family, the preferred range is from about 0.1 to about10 wt% and more preferably from about 0.1 to about 5 wt%. For telomers based on perfluoroalkylpolyethers, such as those in the Krytox® family, the preferred range is from about 0.1 to about 80 wt% and more preferably from about 0.1 to about 50 wt%.

Substrates suitable for coating with the coating compositions disclosed herein can be any optically clear plastic or glass substrate. Preferred substrates are glass, PMMA, PC, PET, TAC and PS; more preferred are glass and PMMA. The thickness of the coating is preferably from10 nm to 1000 nm; more preferably from 70 nm to 120 nm.

In U.S. Patent Appl. No. 20040037967 and PCT application PCT/US03/32090 (W02005/044939), it was shown that certain combinations of fluorinated copolymers coated on various plastic and glass substrates exhibited good adhesion and low reflective index, with the coatings adhering without chemical bonding. It is believed that the coating compositions disclosed herein can provide improved improved hardness without significant loss of transmission to the coatings disclosed therein.

2. The invention provides a coating system comprising two layers. The telomer is contained withinin the top (outer) layer. The substrates and fluorinated telomer suitable for this coating system are as described herein. The upper layer comprises a fluorinated telomer and one or more fluorinated copolymers selected from:
a. poly(TFE/HFP) wherein the molar ratio of HFP to TFE is from about 0.3 to about 1.9;
b. VF2/TFE/HFP terpolymer, wherein the molar ratio of HFP to TFE is from about 0.3 to about 1.9 and the concentration of VF2 is about 19 mole %; and
c. poly(TFE/perfluoro-2,2-dimethyldioxole) wherein the concentration of the perfluorodimethyldioxole is from about 60 to about 90 mole %.

The lower layer comprises one or more selected from:
a. poly(VF2/TFE/HFP) wherein the ratio of TFE to HFP is from about 0.3 to about 1.9 and the concentration of VF2 is from about 18 to about 60 mole % on PMMA substrates and from about 12 to about 40 mole % on PC, PET, and PS substrates;
b. poly(VF/TFE/HFP) wherein the ratio of TFE to HFP is from about 0.9 to about 2.1 and the concentration of VF is from about 42 to about 58 mole %;
c. poly(VAc/TFE/HFIB) wherein the concentration of VAc is from to 69 mole % and the concentration of HFIB is from 14 to 52 mole %; and
d. a TFE/PVOH graft comprising about 46 mole percent TFE.

In one embodiment the two-layer coating system is used to coat PC, PET or PS, the ratio of TFE to HFP is from about 0.9 to about 1.9 in both the lower and upper layer, and the concentration of VF₂ is from about 12 to about 40 mole %.

The thickness of the upper layer can be, for example, from about 10 to about 1000 nm, from about 30 to about 120 nm, or from about 70 to about 120 nm.

The methods and compositions disclosed herein can provide increased hardness in a coating comprising a fluorinated polymer. Increased hardness is provided by incorporating into the upper layer of the coating a fluorinated telomere, as disclosed herein.

The fluorinated copolymers, substrates, and fluorinated telomer are as described above.

The invention is also directed to a method of preparing a coating on a substrate, comprising:
a. dissolving a fluorinated copolymer in a solvent to form a product;
b. adding to the product a dispersion containing a fluorinated telomer in a solvent to form a mixture; and
c. applying the mixture to the surface of the substrate to form a coating.

The fluorinated copolymers, substrates, and tetrafluoroethylene telomer are as described above. The coating system is a two layer system, also as described above. Any solvent can be used to dissolve the fluorinated copolymer and/or disperse the telomer provided that it is inert to the substrate, polymers and other solvents used. A mixture of solvents may also be used for either the copolymer or telomer. Typical solvents for both include, for example, isopropyl alcohol, fluorocarbons, hydrofluorocarbons such as those in the Vertrel® family, Novel^{™} family of solvents and ketone solvent such as methyl isobutyl ketone and methyl ethyl ketone, or the like, as well as mixtures thereof. Preferably the solvent is itself fluorinated. Generally, the dispersion will contain about 0.01% to 20% and usually about 0.1 to 5%, by weight of the telomer. Generally the fluorinated is also dissolved in a solvent at a concentration of about 0.01 % to 20% and usually about 0.1 to 5%, by weight of the copolymer.

The polymers described herein can be made using known methods. Preferably, such methods provide desirably high fluorine content, optical clarity and solution coatability known for fluorinated copolymer coatings. Suitable methods include emulsion and bulk polymerization methods as disclosed, for example, in , Encyclopedia of Polymer Science and Engineering, 1989, Vol. 16, pg 601-613 and Vol. 7, pg. 257-269, John Wiley & Sons.

### EXAMPLES

The copolymers used in the Examples below were made by polymerization at 14,000 psi and 200-400°C as disclosed in US Patent Nos. 5,478,905 and 5,637,663. The coating methods provide single layer coatings, i.e. not embodiments of the invention now claimed.

### Method of measuring transmittance

Light transmittance was measured at 500 nm using a Shimadu #UV-3100 Spectrometer. This machine measures a continuous comparison of a split beam, part of which passed through the sample.

### Method of measuring water contact angle

A drop of pure water (2 micro litters) was placed on the coated layer surface of the test specimen. With a contact angle meter (Kyowa Interfacial Science, Japan), the contact angle was measured.

### Method of measuring hardness

Hardness was measured in conformity to JIS K5400. Hardness of the coating was checked by scratching with the lead of a pencil and shown by concentration signs - 6B, 5B, 4B, 3B, 2B, B, HB, F, H, 2H, 3H, 4H, 5H, 6H, where 6B is the softest and 6H is the hardest. The test piece was turned up on a painted surface and fixed on a level stand. A pencil was held at an angle of 45 degrees, and pressed against the painted surface as strongly as possible to the extent that the lead does not break, pushed out about 1 cm with constant speed ahead of a tester to scratch the coating. The speed to push out was set to 1 cm/s. If any scratches were not found on the coating 2 times or more out of five tests, the pencil was exchanged for one with the concentration sign of a higher rank and the test was repeated until a pencil which damages the coating twice or more was found. The concentration sign recorded was one step lower than that pencil.

### Abrasion Test Method-1

The coated layer surface of the test specimen was rubbed with soft nonwoven fabric under 1 kg load. The appearance after rubbing was observed visually.

### Abrasion Test Method-2

The water contact angle was measured and the surface was observed to check the surface appearance after rubbing with steel wool under a load of 200 g/cm2 for 5 to 20 times.

### Adhesion Test Method

A tool with 10 razor blades separated by a distance of 1 mm was used to cut the coating down to the plastic substrate, drawing the razor bade tool first in one direction and then a second time in a perpendicular direction. This resulted in 100 crosshatched squares. Scotch® brand adhesive tape was applied to the crosshatched area with moderate pressure and pulled off rapidly. Adhesion was scored as the number of squares out of 100 still attached to the substrate.

### Polymer

The fluoropolymer used in the examples was a 52/22/26mol% VF2/HFP/TFE terpolymer. This was compounded with varying amounts of DupontTM DryFilm Dispersions -RA" (E.I. DuPont de Nemours, Wilmington, DE), a TFE telomer having the average molecular weight of 3,000 dispersed in Vertrel® XF solvent. The chemical structure of the Dupont™ Dryfilm is (C₂F₄)ₙ, where n is typically 10-500.

### Example of Coating method

Solutions of 2.0 wt% fluoropolymer (52/22/26mol% VF2/HFP/TFE terpolymer) in Vertrel® XF were made by agitating chunks of the polymer with solvent for several days at room temperature. The DryFilm dispersion was added to the solution. The dispersion used was Dupont™ DryFilm RA Dispersion (E.I. DuPont de Nemours, Wilmington, DE), a TFE telomer having the average molecular weight of 3,000 dispersed in Vertrel® XF solvent. The chemical structure of the Dryfilm is (C₂F₄)ₙ,
where n is typically 10-500.

PMMA and glass plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven. The temperature was 80 degree C for PMMA, and 300 degree C for glass plates. The results are shown below in Table 1.

**TABLE 1**

| | Comp.1 | Example 1 | Example 2 | Example 3 | Comp. 2 | Comp. 3 |
|---|---|---|---|---|---|---|
| Fluoropolymer : dry-film (weight ratio) | 100:0 | 97:3 | 95:5 | 90:10 | 0:100 | No-coat |
| Transmittance at 500nm wavelength (%) | 98.1 | 96.6 | 93.6 | 90.5 | 69.0 | 92.5 |
| Initial water contact angle (degree) | 101 | 99 | 98 | 99 | 100 | 72 |
| Hardness | 2H | 3H | 5H | 5H | Below 6B | - |
| Abrasion resistance 1 (1 kg load) | Scratched | No scratch | No scratch | No scratch | Easily came off | - |
| Water contact angle after abrasion resistance 2 (steel wool, 5 times) | 86 | 92 | 94 | 95 | Easily came off | - |
| Water contact angle after abrasion resistance 2 (steel wool, 20 times) | 65 | 87 | 91 | 89 | Easily came off | - |

Solutions of 2.0 wt% fluoropolymer (52/22/26mol% VF2/HFP/TFE terpolymer) in Vertrel® XF were made by agitating chunks of the polymer with solvent for several days at room temperature. The DryFilm dispersion was added to the solution. The dispersion used was Dupont^{™} DryFilm RA Dispersion (E.I. DuPont de Nemours, Wilmington, DE), a TFE telomer having the average molecular weight of 3,000 dispersed in Vertrel® XF solvent. The chemical structure of the Dryfilm® is (C₂F₄)ₙ, where n is typically 10-500.

PC plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven at 120°C. The results are shown below in Table 2.

**TABLE 2**

| | Comp. 4 | Example 4 | Example 5 | Example 6 | Comp. 5 | Comp. 6 |
|---|---|---|---|---|---|---|
| Fluoropolymer : dry-film (weight ratio) | 100:0 | 97:3 | 95:5 | 90:10 | 0:100 | No-coat |
| Transmittance at 500nm wavelength (%) | 96.0 | 95.3 | 91.9 | 89.4 | 64.6 | 87.1 |
| Initial water contact angle (degree) | 101 | 100 | 98 | 99 | 102 | 89 |
| Abrasion resistance 1 (1 kg load) | Scratched | No scratch | No scratch | No scratch | Easily came of | - |
| Adhesion | 100 | 100 | 100 | 100 | 100 | 0 |

Solutions of 2.0 wt% fluoropolymer (52/22/26mol% VF2/HFP/TFE terpolymer) in Vertrel® XF were made by agitating chunks of the polymer with solvent for several days at room temperature. The Krytox® dispersion was added to the solution. The dispersion used was Krytox® GPL-104 (E.I. DuPont de Nemours, Wilmington, DE), a telomer of hexafluoropropylene epoxide dispersed in Vertrel® XF solvent. The chemical structure of the Krytox is F-(CF(CF₃)CF₂-CF₂-O)ₙ,-CF₂CF₃, where n' is 2 to 500.

PMMA plates measuring 2.5 cm by 5.0 cm by 3 mm thick were used for testing. The plates were coated by lowering the plates into the polymer solution at a rate of 300mm/min. and then, 30 seconds later, raising the plates back out of the solution at 225mm/min. After 5-10 minutes air drying, the plates were dried for 10 minutes in an air oven at 80°C. The results are shown below in Table 3.

**TABLE 3**

| | Comp.7 | Example 7 | Example 8 | Example 9 | Example 10 |
|---|---|---|---|---|---|
| Fluoropolymer : Krytox (weight ratio) | 100:0 | 90:10 | 80:20 | 70:30 | 60:40 |
| Transmittance at 500nm wavelength (%) | 98.1 | 98.0 | 98.1 | 97.5 | 97.4 |
| Initial water contact angle (degree) | 101 | 113 | 113 | 114 | 113 |
| Abrasion resistance 2 (steel wool, 5 times) | 86 | 106 | 107 | 108 | 108 |
| Abrasion resistance 2 (steel wool, 15 times) | 79 | 96 | 97 | 95 | 100 |
| | Example 9 | Example 10 | Example 11 | Comp. 8 | Comp. 4 |
| Fluoropolymer : krytox (weight ratio) | 50:50 | 40:60 | 20:80 | 0:100 | Non-coat |
| Transmittance at 500nm wavelength (%) | 97.0 | 96.9 | 96.4 | 95.7 | 92.5 |
| Initial water contact angle (degree) | 113 | 112 | 110 | 79 | 72 |
| Abrasion resistance 2 (steel wool, 5 times) | 103 | 103 | 101 | 86 | - |
| Abrasion resistance 2 (steel wool, 15times) | 94 | 87 | 88 | 84 | -- |

## Claims

1. A coating comprising a fluorinated telomer and one or more fluorinated copolymers selected from:
a fluorinated copolymer of the formula VF2/TFE/HFP wherein the molar ratio of TFE to HFP is from about 0.1 to about 1.9 and the VF2 content is from about 12 to about 60 mole %;
a fluorinated copolymer of the formula VF2/HFP wherein the VF2 content is from about 40 to about80 mole %;
a fluorinated copolymer of the formula VF2/TFE/PMVE wherein the VF2 content is from about 18 to about 60 mole % and the TFE/PMVE mole ratio is from about 0.1 to about1.9.
a fluorinated copolymer of the formula VF/TFE/HFP wherein the molar ratio of TFE to HFP is from about 0.1 to about 1.9 and the VF content is from about 12 to about 60 mole%;
a fluorinated copolymer of the formula TFE/perfluoro-2,2-dimethyldioxole wherein the concentration of the perfluoro-2,2-dimethyldioxole is from about 60 to about 90 mole %;
a fluorinated copolymer of the formula VF2/perfluoro-2,2-dimethyldioxole/TFE wherein the molar ratio of TFE to perfluoro-2,2-dimethyldioxole is from about 0.1 to about 1.9 and the VF2 content is from about 12 to about 60 mole %; and
a fluorinated copolymer of the formula VF2/ perfluoro-2,2-dimethyldioxole wherein the VF2 content is from about 20 to about 80 mole%.

2. The coating system of Claim 1 wherein the fluorinated telomer is present in an amount of up to 80% by weight.

3. The coating system of Claim 1 wherein the fluorinated telomer comprises tetrafluoroethylene or perfluoroalkylpolyethers units.

4. The coating system of Claim 3 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

5. The coating system of Claim 1 wherein the substrate is selected from PMMA, PC, PET, PS, TAC and glass.

6. A method of increasing the hardness of a coating comprising a fluorinated copolymer , comprising incorporating into the coating a fluorinated telomer.

7. The method of Claim 6 wherein the fluorinated telomer is present in an amount of up to 80% by weight.

8. The method of Claim 6 wherein the fluorinated telomer comprisescomprises tetrafluoroethylene or perfluoroalkylpolyether units.

9. The method of Claim 8 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

10. The method of Claim 6 wherein the substrate is selected from PMMA, PC, PET, PS TAC and glass.

11. The method of Claim 6 wherein the coating system is a one-layer system and the fluorinated copolymer is one or more fluorinated copolymers selected from:
a fluorinated copolymer of the formula VF2/TFE/HFP wherein the molar ratio of TFE to HFP is from 0.1 to1.9 and the VF2 content is from12 to 60 mole %;
a fluorinated copolymer of the formula VF2/HFP wherein the VF2 content is from about 40 to about80 mole %;
a fluorinated copolymer of the formula VF2/TFE/PMVE wherein the VF2 content is from about 18 to 60 mole % and the TFE/PMVE mole ratio is from about 0.1 to about1.9.
a fluorinated copolymer of the formula VF/TFE/HFP wherein the molar ratio of TFE to HFP is from 0.1 to1.9 and the VF content is from12to60 mole%;
a fluorinated copolymer of the formula TFE/perfluoro-2,2-dimethyldioxole wherein the concentration of the perfluoro-2,2-dimethyldioxole is from 60 to 90 mole %;
a fluorinated copolymer of the formula VF2/perfluoro-2,2-dimethyldioxole/TFE wherein the molar ratio of TFE to perfluoro-2,2-dimethyldioxole is from 0.1 to 1.9 and the VF2 content is from 12 to60 mole %; and
a fluorinated copolymer of the formula VF2/ perfluoro-2,2-dimethyldioxole wherein the VF2 content is from about 20 to 80 mole%.

12. A method of coating a substrate, comprising:
a. providing a substrate having a surface;
b. dissolving a fluorinated copolymer in a solvent to form a product;
c. adding to the product a dispersion comprising a fluorinated telomer in a fluorinated solvent to form a mixture; and
d. applying the mixture of step b) to the surface of the substrate to form a coating.

13. The method of Claim 12 wherein the fluorinated telomer is present in an amount of up to 80% by weight.

14. The method of Claim 12 wherein the fluorinated telomer comprises tetrafluoroethylene or perfluoroalkylpolyether units.

15. The method of Claim 14 wherein the fluorinated telomer has the formula (C₂F₄)ₙ or F-(CFCF₃-CF₂-O)ₙ-CF₂CF₃ where n is 2 to 500, and wherein the fluorinated telomer is optionally end-capped.

16. The method of Claim 12 wherein the substrate is selected from the group consisting of PMMA, PC, PET, PS, TAC and glass.

17. The method of Claim 12 wherein the fluorinated copolymer is selected from:
a fluorinated copolymer of the formula VF2/TFE/HFP wherein the molar ratio of TFE to HFP is from about 0.1 to about 1.9 and the VF2 content is from about 12 to about 60 mole %;
a fluorinated copolymer of the formula VF2/HFP wherein the VF2 content is from about 40 to about80 mole %;
a fluorinated copolymer of the formula VF2/TFE/PMVE wherein the VF2 content is from about 18 to about 60 mole % and the TFE/PMVE mole ratio is from about 0.1 to about1.9.
a fluorinated copolymer of the formula VF/TFE/HFP wherein the molar ratio of TFE to HFP is from about 0.1 to about 1.9 and the VF content is from about 12 to about 60 mole%;
a fluorinated copolymer of the formula TFE/perfluoro-2,2-dimethyldioxole wherein the concentration of the perfluoro-2,2-dimethyldioxole is from about 60 to about 90 mole %;
a fluorinated copolymer of the formula VF2/perfluoro-2,2-dimethyldioxole/TFE wherein the molar ratio of TFE to perfluoro-2,2-dimethyldioxole is from about 0.1 to about 1.9 and the VF2 content is from about 12 to about 60 mole %; and
a fluorinated copolymer of the formula VF2/ perfluoro-2,2-dimethyldioxole wherein the VF2 content is from about 20 to about 80 mole%.
